# EUROPEAN PATENT SPECIFICATION

(11) **EP 0 590 263 B1**
(45) Date of publication and mention of the grant of the patent: **18.06.2003**
(21) Application number: 93112048.9
(22) Date of filing: 28.07.1993
(51) Int. Cl.: C08K 3/34, C09C 3/08

(54) **Gas barrier resin composition and process for producing the same**
Gasdichte Zusammensetzung und Verfahren selbige herzustellen
Composition barrière à gaz et procédé pour sa production

(30) Priority: 29.07.1992 JP 20233992
(43) Date of publication of application: 06.04.1994
(73) Proprietor: SUMITOMO CHEMICAL COMPANY LIMITED, Osaka-shi, Osaka 541-0041 (JP)
(72) Inventor: Kotani, Kozo, Toyonaka-shi (JP); Kawakita, Toshio, Ibaraki-shi (JP); Sakaya, Taiichi, Takatsuki-shi (JP); Kuroda, Toshiya, Takatsuki-shi (JP)
(74) Representative: Cresswell, Thomas Anthony

(56) References cited:
- EP-A- 0 295 517
- EP-A- 0 309 095
- EP-A- 0 459 472
- WO-A-90/05761
- DE-A- 1 694 349
- US-A- 4 528 235
- DATABASE WPI Week 8423, Derwent Publications Ltd., London, GB; AN 84-143594 & JP-A-59 075 953 (KAWAKAMI TORYO KK) 28 April 1984
- DATABASE WPI Week 8922, Derwent Publications Ltd., London, GB; AN 89-160456 & JP-A-1 101 373 (DAISO CO LTD) 19 April 1989

## Description

This invention relates to a resin composition, film or laminate which are excellent in gas barrier properties and to a process for producing the same.

Many functions are required for packaging, and various gas barrier properties for protecting the contents are important properties which affect the preservability of foods. Change in distributive system, diversification of packaging technique, additive regulations and change in taste increase more and more the necessity of gas barrier properties. On the other hand, the gas barrier properties have been weak points of general plastics.

The food-deteriorating factors are oxygen, light, heat, water and the like, and in particular, oxygen is a serious factor. Gas barrier materials are indispensable for effectively intercepting oxygen and simultaneously for measures of controlling the deterioration of foods such as gas-filling, vacuum packaging and the like. Since the barrier materials have a barrier function to not only oxygen gas but also other various gases, organic solvent vapors, fragrance and the like, they can be used for anticorrosion, deodorization and antisublimation and have been utilized in many fields of foods, cosmetics, agricultural chemicals, pharmaceuticals and the like such as package of confectionery, bonito pack, retort pouch, mineral water container and the like.

Of films consisting of a thermoplastic resin, oriented films of polypropylene, polyester, polyamide or the like have excellent mechanical properties, heat resistance, transparency and the like and are widely used as packaging materials. However, when these films are used for packaging foods, they are unsatisfactory in barrier properties to oxygen and other gases, and therefore, they tend to cause such various problems that their contents are deteriorated by oxidative degradation or with aerobic bacteria, fragrant components permeate the films to lose the taste of the contents, and the moisture in the atmosphere wets the contents to make the taste bad. Thus, usually, such a measure is often taken that other film layers having good gas barrier properties are laminated thereto.

Heretofore, various transparent plastic materials having unsatisfactory gas barrier properties have been known and there are, for example, films composed of polyvinyl alcohol, ethylene-vinyl alcohol copolymer or polyvinylidene dichloride resin. However, these plastic materials are oxygen-permeable in such a degree that the amount of oxygen permeated cannot be neglected while a metal or glass material to be used in canning or bottling has an oxygen permeability of substantially zero.

Another method for imparting gas barrier properties is a method of dispersing an inorganic material in the flat form in a resin. For example, JP-A-62-148532 describes a production method which comprises coating on a releasable substrate a coating composition consisting of 100 parts by weight of a polyurethane resin solution having a concentration of 30% in 1,6-hexanepolycarbonate diol, 25 parts by weight of mica powder and 60 parts by weight of dimethyl-formamide, drying the same and then releasing it from the substrate.

JP-A-64-043554 describes a method of obtaining a film which comprises adding mica particles having an average length of 7 µm and an aspect ratio of 140 to a methanolic aqueous solution of an ethylene-vinyl alcohol copolymer, pouring the solution in a cold water to form a precipitate, removing the precipitate by filtration, drying it to form pellets and then forming the pellets into a film.

JP-A-3-93542 describes a method which comprises coating a biaxially oriented polyethylene terephthalate (OPET) film with a coating composition consisting of a silyl group-containing modified polyvinyl alcohol and synthetic hectorite at a weight ratio of 50:50, drying the same and then heat-treating it at 130-150°C.

However, the films obtained by these techniques are still not sufficient in gas barrier properties and cannot be always said to be satisfactory.

Thus, it is the object of the present invention to overcome the above-mentioned problems of the prior art and to provide a resin composition or its molded article including film having excellent high level gas barrier and moisture barrier properties.

Another object of this invention is to provide a process for producing the gas barrier resin composition or its molded article including film.

The above first object has been achieved by a resin composition or its film or laminate which comprises a polyvinyl alcohol obtained by hydrolyzing the ester portion of a vinyl acetate polymer, the degree of saponification being 80 mole % or more, and an inorganic laminar compound having a particle size L of 5 µm or less determined by a light-scattering method and an aspect ratio Z=L/a of 50 to 5,000 wherein a is the unit thickness determined by powder X-ray diffraction, and wherein the inorganic laminar compound is swollen or cloven with a solvent.

This invention further provides a process for producing the above resin composition or its film, which comprises dispersing an inorganic laminar compound in a resin or resin solution in the state that the inorganic laminar compound is swollen or cloven with a solvent, and removing the solvent from the dispersion, if necessary in the form of a film, while keeping said state.

In addition the invention provides the use of (a) an inorganic laminar compound as defined above, and (b) a polyvinyl alcohol, in a gas barrier resin composition or a filmed formed therefrom.

The inorganic laminar compound used in this invention is an inorganic compound having a laminar structure formed by unit crystal layers being piled up one another, and any inorganic compound may be used as far as it has a particle size of 5 µm or less and an aspect ratio of 50-5,000. In view of the gas barrier properties, the aspect ratio is preferably 200-3,000. If the aspect ratio is less than 50, the gas barrier properties are not sufficiently exhibited, and if the aspect ratio is more than 5,000, such an inorganic compound is technically difficult to produce and is too expensive.

When the particle size is 3 µm or less, the transparency is higher and such an inorganic compound is preferred.

Specific examples of the inorganic laminar compound include graphite, phosphoric acid salt derivative type compounds (e.g. zirconium phosphate compounds), chalcogenaides [the IV Group metal (Ti, Zr, Hf) dichalcogenides, the V Group metal (V, Nb, Ta) dichalcogenides and the VI Group metal (Mo, W) dichalcogenides which are represented by the formula MX₂ wherein X represents chalcogen (S, Se, Te)], clay minerals and the like.

The measurement of true particle size in a resin composition is very difficult, and therefore, the particle size of the inorganic laminar compound used in this invention is a value determined according to a dynamic light-scattering method in a solvent.

When an inorganic laminar compound sufficiently swollen with the same solvent as used in the dynamic light-scattering method is compounded with a resin, the particle size of the inorganic laminar compound in the resin can be considered to be close to the particle size in a solvent.

The aspect ratio (Z) of the inorganic laminar compound used in this invention is indicated by the relation of Z=L/a in which L is the particle size determined according to the dynamic light-scattering method in a solvent and a is the unit thickness of the inorganic laminar compound (the unit thickness a is a value determined by measurement of the inorganic laminar compound alone according to the powder X-ray diffraction), provided that in Z=L/a, the spacing d determined by the powder X-ray diffraction of the composition is present and satisfies a relation of a < d, in which the value of d - a is required to be greater than the width of one chain of resin in the composition.

Z cannot necessarily be said to be the true aspect ratio of the inorganic laminar compound in the resin composition; however, it is considered reasonable for the following reason:

The aspect ratio of the inorganic laminar compound in the resin composition is very difficult to measure directly. Between the spacing d obtained by the powder X-ray diffraction of the composition and the unit thickness a determined by the powder X-ray diffraction of the inorganic laminar compound, there is a relation of a < d, and when the d - a value is greater than the width of one chain of the resin in the composition, it follows that in the resin composition, the resin is inserted between the layers of the inorganic laminar compound, and hence, it is clear that the thickness of the inorganic laminar compound is the unit thickness a.

Also, the measurement of the true particle size in the resin composition is very difficult, and taking the case where the inorganic laminar compound is sufficiently swollen with the same solvent as used in the dynamic light-scattering method and then compounded with the resin, it can be understood that the particle size of the inorganic laminar compound in the resin is considerably close to that in the solvent, provided that the particle size L determined by the dynamic light-scattering method is considered not to exceed the long diameter Lₘₐₓ, so that the true aspect ratio Lₘₐₓ/a cannot theoretically become lower than Z in the definition of the aspect ratio in this invention.

From the above two points, it is considered that the aspect ratio in this invention be relatively high in propriety. In this invention, the aspect ratio and particle size mean the above-defined aspect ratio and particle size, respectively.

The inorganic laminar compound having a large aspect ratio is an inorganic laminar compound which can be swollen or cloven with a solvent. Among them, clay minerals having a swellability are more preferable. The clay minerals are classified into a type of a two-layer structure in which on the upper portion of the tetrahedron layer of silica is present an octahedron layer in which the center metal is aluminum or magnesium , and a type of a three-layer structure in which an octahedron layer in which the center metal is aluminum or magnesium is sandwiched between tetrahedron layers of silica.

The former type includes the kaolinite Group and the antigorite Group . The latter type includes the smectite Group, the vermiculite Group and the mica Group corresponding to the number of cations between the layers.

Specifically, kaolinite, dickite, nacrite, halloysite, antigorite, chrysotile, pyrophyllite, montmorillonite, hectorite, sodium tetrasililic mica, sodium taeniolite, commonmica, margarite, talc, vermiculite, phlogopite, xanthophyllite and chlorite .

The solvent for swelling the inorganic laminar compound is not critical; however, in the case of, for example, natural swellable clay minerals, preferable are water; alcohols such as methanol, ethanol, propanol, isopropanol, ethylene glycol and diethylene glycol ; dimethylformamide; dimethylsulfoxide; and acetone . Water and alcohols such as methanol are more preferable.

The resin used in this invention is not critical and includes, for example, polyvinyl alcohol (PVA), ethylene-vinyl alcohol copolymer (EVOH), polyvinylidene dichloride (PVDC), polyacrylonitrile (PAN), polysaccharide, and polyacrylic acid and its esters .

Preferable examples of the resin are high hydrogen-bonding resins satisfying the requirement that the weight percentage of hydrogen-bonding group or ionic group per unit weight of the resin falls within the range of 20-60%.

More preferable examples are high hydrogen-bonding resins satisfying the requirement that the weight percentage of the hydrogen-bonding group or ionic group per unit weight of the resin falls within the range of 30-50%. The hydrogen-bonding group of the high hydrogen-bonding resin includes hydroxyl group, amino group, thiol group, carboxyl group, sulfonic acid group and phosphoric acid group, and the ionic group includes carboxylate group, sulfonate ion group, phosphate ion group, ammonium group and sulfonium group .

Of the hydrogen-bonding groups or ionic groups of the high hydrogen-bonding resins, more preferable are hydroxyl group, amino group, carboxyl group, sulfonic acid group, carboxylate group, sulfonate ion group and ammonium group .

Specific examples of the resin include, for example, polyvinyl alcohol, ethylene-vinyl alcohol copolymer, the vinyl alcohol fraction of which is 41 mole % or more, polysaccharide such as hydroxymethylcellulose, hydroxyethylcellulose, carboxylmethylcellulose, amylose, amylopectin, pluran, cardran, xanthan, chitin, chitosan and cellulose; polyacrylic acid; polysodium acrylate; polybenzene-sulfonic acid; polysodium benzenesulfonate, polyethyleneimine; polyallylamine; its ammonium salt; polyvinyl thiol; and polyglycerin.

More preferable high hydrogen-bonding resins are polyvinyl alcohol and polysaccharide.

The term "polyvinyl alcohol" referred to herein means a product obtained by hydrolyzing (saponifying) the ester portion of a vinyl acetate polymer, and exactly, a copolymer of vinyl alcohol and vinyl acetate is formed. In this case, the degree of saponification is 80 mole % or more. The degree of polymerization is preferably 100 to 5,000.

The term "polysaccharide" used herein means biopolymers which are synthesized by condensation-polymerization of various monosaccharides in a living body, and includes chemically modified biopolymers. The polysccharides include, for example, cellulose; cellulose derivatives such as hydroxymethylcellulose, hydroxyethylcellulose, carboxymethylcellulose like; amylose; amylopectin; pluran; cardran; xanthan; chitin; and chitosan.

When the resin used in this invention is a high hydrogen-bonding resin, a cross-linking agent for the hydrogen-bonding group may be used for the purpose of improving the water resistance of the resin (the water resistance means the barrier properties after water-resistant environmental test).

The cross-linking agent for hydrogen-bonding group is not critical, and includes, for example, titanium coupling agent, silane coupling agent, melamine coupling agent, epoxy coupling agent, isocyanate coupling agent, copper compound, zirconium compound , and preferable is the zirconium compound.

Specific examples of the zirconium compound include, for example, zirconium halides such as zirconium oxychloride, zirconium hydroxychloride, zirconium tetrachloride and zirconium bromide; zirconium salts with mineral acids such as zirconium sulfate, basic zirconium sulfate and zirconium nitrate; zirconium salts with organic acids such as zirconium formate, zirconium acetate, zirconium propionate, zirconium caprylate and zirconium stearate; and zirconium complexes such as ammonium zirconium carbonate, sodium zirconium sulfate, ammonium zirconium acetate, sodium zirconium oxalate, sodium zirconium citrate and ammonium zirconium citrate.

The amount of the cross-linking agent for hydrogen-bonding group added is not particularly limited as far as the ratio (K) of the number of moles (CN) of the cross-linking group of the cross-linking agent to the number of moles (HN) of the hydrogen-bonding group of the high hydrogen-bonding resin (namely, K = CN/HN) falls within the range of 0.001 to 10, and preferably within the range of 0.01 to 1.

The composition ratio (volume ratio) of the inorganic laminar compound to the resin used in this invention is generally in the range of 5/95-90/10, preferably in the range of 5/95-50/50.

When the volume ratio of the inorganic laminar compound is less than 5/95, the barrier properties are not sufficient, and when it is more than 90/10, the film-formability is not satisfactory.

The method of compounding the inorganic laminar compound with the resin is not critical, and includes, for example, a method which comprises mixing a resin solution with a dispersion formed by previously swelling or cleaving the inorganic laminar compound with a solvent and then removing the solvent; a method which comprises adding a dispersion formed by swelling or cleaving the inorganic laminar compound with a solvent to the resin, and then removing the solvent, and a method which comprises heat-mixing the resin with the inorganic laminar compound. The former two are preferable since a particularly large aspect ratio is easily obtained.

In the above-mentioned former two methods, heat-ageing at a temperature of 110°C to 220°C after the removal of the solvent can enhance the water resistance of a film (the barrier properties after water-resistant environmental test). The ageing time is not critical, and it is necessary that the film temperature reaches at least the desired temperature. For example, in the case of contacting with a heating medium such as using a hot air drier, a period of 1 second to 100 minutes is preferred.

The heat source is not critical, and contact with hot roll, contact with a heating medium such as hot air or oil, heating with an infrared ray, heating with a microwave and other various means can be applied.

The effect of the water resistance referred to herein is remarkably high when the resin is a high hydrogen-bonding resin and when the inorganic laminar compound is a clay mineral.

The resin composition of this invention is molded into various forms and then used. The form of the molded article is not critical, and when the molded article is used as a packaging material such as film, sheet, container (e.g. tray, bottle or the like), etc., gas barrier properties are sufficiently exhibited.

The molded article is usually used in the form of a laminate. The substrate of the laminate is not critical, and general substrates such as resin, paper, aluminum foil, wood, woven fabric, non-woven fabric and the like may be used.

The resin to be used as a substrate includes polyolefin resins such as polyethylene (low density and high density), ethylene-propylene copolymer, ethylene-butene copolymer, ethylene-hexene copolymer, ethylene-octene copolymer, polypropylene, ethylene-vinyl acetate copolymer, ethylene-methyl methacrylate copolymer and ionomer resin; polyester resins such as polyethylene terephthalate, polybutylene terephthalate and polyethylene naphthalate; polyamide resins such as nylon-6, nylon-6,6, meta-xylenediamine-adipic acid condensation polymer and polymethyl methacrylimide ; acrylic resins such as polymethyl methacrylate and the like; styrene or acrylonitrile resins such as polystyrene, styrene-acrylonitrile copolymer, styrene-acrylonitrile-butadiene copolymer and polyacrylonitrile ; hydrophobilized cellulose resins such as cellulose triacetate and cellulose diacetate; halogen-containing resins such as polyvinyl chloride, polyvinylidene dichloride, polyvinylidene difluoride and Teflon; hydrogen-bonding resins such as polyvinyl alcohol, ethylene-vinyl alcohol copolymer and cellulose derivatives; and engineering plastic resins such as polycarbonate resin, polysulfone resin, polyethersulfone resin and polyetheretherketone resin .

In the case of laminates in the form of a film, the outer layer is preferably a biaxially oriented polypropylene, polyethylene terephthalate or nylon film, or a polyvinylidene dichloride-coated (so-called K-coat) biaxially oriented polypropylene, polyethylene terephthalate or nylon film, and the inner layer is preferably a polyolefin resin film such as polyethylene (low density or high density) film, ethylene-propylene copolymer film, ethylene-butene copolymer film, ethylene-hexene copolymer film, ethylene-octene copolymer film, polypropylene film, ethylene-vinyl acetate copolymer film or ethylene-methyl methacrylate copolymer film in view of good heat-sealability.

The method of laminating the resin composition of this invention to a substrate is not critical. When the substrate is a film or sheet, preferred is a coating method which comprises coating a coating solution of the resin composition on the surface of the substrate, drying the solution and then heat-treating the coated substrate or a method which comprises laminating the film of this invention to a substrate.

The coating method includes direct gravure method; reverse gravure method; microgravure method; roll-coating methods such as two-roll beat coat method, bottom-feeding three-roll reverse coat method and the like; doctor knife method; die coat method; dip coat method; bar coating method and combinations thereof.

The coating film thickness may be varied depending upon the kind of substrate and the aiming barrier properties, and it is preferably 10 µm or less, more preferably 1 µm or less, in terms of dry thickness. When it is 1 µm or less, the transparency of the laminate is greatly high, so that such a thickness is preferred in uses requiring transparency. There is no lower limit, and a thickness of 1 nm or more is prefer-. red in order to obtain effective gas barrier properties.

As far as the effect of this invention is not lost, the resin composition of this invention may contain various additives such as ultraviolet absorber, coloring matter, antioxidant and the like. This invention covers a laminated film and laminate which have at least one layer of the above-mentioned film.

According to this invention, it becomes possible to obtain a gas barrier film having so high level gas barrier and moisture barrier properties as not to have been reached by using an inorganic laminar compound having a particle size of 5 µm or less and an aspect ratio of 50-5,000 in a mixture of a resin and an inorganic laminar compound.

As stated in Examples which appear hereinafter, when the inorganic laminar compound is not contained, the barrier properties are greatly inferior to this invention even if the same resin is used (see, for example, Example 1 and Comparative Example 1).
Even if the resin composition is composed of a resin and an inorganic laminar compound, when the inorganic laminar compound has an aspect ratio of about 30, the barrier properties are inferior 100 times or more to the Examples of this invention (see, for example, Comparative Example 3 and Example 1). In the Examples, the barrier properties are greatly different between the case of an aspect ratio of about 100 and the case of an aspect of about 500, and the barrier-imparting effect is greatly changed at an aspect ratio of about 200. When the aspect ratio is more than 200, a greater barrier-enhancing effect can be expected.

In the process for forming a film by adding to a resin or a resin solution a dispersion formed by swelling or cleaving an inorganic laminar compound with a solvent and removing the solvent, heat-ageing after the removal of the solvent (for example, at 150°C for 10 minutes) greatly enhances the water resistance (barrier properties after water-resistant environmental test) of the film as compared with the case in which no heat-ageing is effected. This means that when the film is used in packaging foods, the package is resistant to high temperature and moisture conditions, boiling treatment or retort treatment, and the film is very much useful in practice.

Moreover, when a high hydrogen-bonding resin is used, the addition of a cross-linking agent for the hydrogen-bonding group (ammonium zirconium carbonate is used in this case) greatly enhances the water resistance (namely the barrier properties after water-resistant environmental test) of the film. When this is combined with the above-mentioned heat-ageing treatment, the effect is further increased, and the resulting film is more preferably used in packaging foods which may be subjected to high temperature and moisture conditions, boiling treatment or retort treatment.

The resin composition of this invention has so high level barrier properties as not to be predicted from conventional resin materials. The oxygen-permeability per µm of thickness of the film of this invention is not more than 2 cc/m²/day/atm (cm³/m²/day/bar), or in some cases not more than 0.2 cc/m²/day/atm (cm³/m²/day/bar), under the conditions that the temperature is 31°C and the relative humidity is 61%, while even the ethylene-vinyl alcohol copolymer which has the best oxygen barrier properties among commercially available resins has an oxygen-permeability of 15 cc/m²/day/atm (cm³/m²/day/bar). Further, the ethylene-vinylalcohol copolymer remarkably deteriorates gas barrier property at high humidity exceeding 90%RH. As shown in Comparative Examples 25 and 26, its oxygen-permeability per µm exceeds 90 cc/m²/day/atm (89 cm³/m²/day/bar) at a condition of 23.8°C, 94.5%RH. On the other hand, according to Examples 34 - 45, especially Example 45 of the present invention, oxygen-permeability per µm under the same condition as above is 0.06 cc/m²/day/atm (cm³/m²/day/bar). This fact indicates that a film of the present invention has very superior gas barrier property even at high humidity. The resin composition of this invention is greatly superior in barrier properties to conventional resins and is close to metal and ceramic in respect of barrier properties. Therefore, the resin composition can be used in uses requiring a metal such as aluminum foil or an inorganic material such as glass in view of gas barrier properties. Thus, the resin composition of this invention can be said to be a material which has broken down the common knowledge of gas barrier resin composition (such weak points of metal and ceramic that the former is opaque and the latter is brittle can be overcome by the resin composition of this invention).

That is to say, the resin composition of this invention can be used in the form of a film in packaging miso, sliced dried bonito, confectionery, noodle, ham, sausage, boiled rice, curry, stew and the like; in the form of a bottle as a squeeze bottle for mayonnaise or a container for juice, soy source, source, edible oil and the like; and can further be used for packaging industrial materials in medical, electronic, chemical and mechanical fields such as blood transfusion pack, semiconductor package, oxidative chemicals package, precision parts package and the like. Thus, the resin composition of this invention can be used in various forms in a wide field.

This invention is explained in more detail below referring to Examples; however, this invention is not limited to these Examples.

Various physical properties were measured by the following methods.

### [Oxygen-permeability]

Measured by an oxygen-permeability measuring apparatus (OX-TRAN 10/50A manufactured by MOCON) at a temperature of 31°C (moisture-controlling constant temperature bath: 21°C) (the relative humidity was 61%).

### [Thickness]

Measured by means of a digital thickness meter when the thickness is 0.5 µm or more or by means of a gravimetric analysis (the measured weight of a film having a unit area is divided by the area and then divided by the specific density of the composition) when the thickness is less than 0.5 µm, or by an elemental analysis in the case of a laminate of the resin composition of this invention to a substrate (the ratio of the thickness of the resin composition layer to the thickness of the substrate is determined from the ratio of the analysis value of the specific inorganic element (resulting from the composition layer) of the laminate to the analysis value of the specific element of inorganic laminar compound alone.

### [Particle size]

Measured by an ultrafine particle size analyzer (BI-90 manufactured by Brookheven) at a temperature of 25°C in an aqueous solvent. The center diameter determined from the photon correlation method according to a dynamic light-scattering method is taken as particle size L.

### [Aspect ratio calculation]

Using an X-ray diffractometry (XD-5A manufactured by Shimadz Seisakusho), the inorganic laminar compound alone and the resin composition were subjected to diffraction measurement by a powder method to determine the spacing a (unit thickness) of the inorganic laminar compound, and it was confirmed from the diffraction measurement of the resin composition that there was a portion in which the spacing of the inorganic laminar compound was broadened. Using the particle size L determined by the above-mentioned method, the aspect ratio Z was determined from the equation Z = L/a.

### Example 1

Synthetic mica [tetrasililic mica (Na-Ts) manufactured by Topy Kogyo] was dispersed in ion-exchanged water (0.7 µS/cm or less) in a proportion of 0.65 % by weight. This dispersion is used hereinafter as an inorganic laminar compound dispersion (Liquid A). The particle size of the synthetic mica (Na-Ts) was 977 nm, and the a value obtained from the powder X-ray diffraction was 0.9557 nm, and the aspect ratio Z was 1043. Polyvinyl alcohol (PVA 210 manufactured by Kurarey, saponification degree: 88.5%, polymerization degree: 1,000) was dissolved in deionized water (0.7 µS/cm or less) in a concentration of 0.325% by weight. The resulting solution is used hereinafter as a resin solution (Liquid B). Liquid A and Liquid B were mixed so that the solid component ratio (volume ratio) [inorganic laminar compound/resin] was 3/7. The resulting mixture is used hereinafter as a coating solution. The coating solution was applied onto a substrate obtained by subjecting a triacetylcellulose (TAC) film (FUJITAC CLEAR manufactured by Fuji Photo Film Co., Ltd.) having a thickness of 76 µm to surface saponification treatment, and then dried at room temperature to obtain a gas barrier film. The dry thickness of the coating layer was 0.87 µm. The oxygen-permeability of the resulting laminated film at 31°C and 61% RH was 0.092 cc/m²/day/atm (0.091 cm³/m²/day/bar). This value was reduced to that in the case where the dry coating thickness was 1.0 µm to obtain an oxygen-permeability at 31°C and 61% RH of 0.08 cc/m²/day/atm (cm³/m²/day/bar). Hence, the laminated film was excellent in gas barrier properties.

### Example 2

The same procedure as in Example 1 was repeated, except that the resin of Liquid B was replaced with hydroxyethylcellulose (manufactured by Wako Junyaku Kogyo) to obtain a gas barrier film, which was then subjected to oxygen-permeability test. The result obtained is indicated in Table 1 which shows excellent gas barrier properties.

### Example 3

The same procedure as in Example 1 was repeated, except that the coating and drying were conducted using a direct gravure coater (Multicoater M-200 manufactured by Hirano Tech-Seed) by a direct gravure coating method (coating speed: 1.7 m/min, drying temperature: 80°C, repeatedly coated 4 times) to obtain a gas barrier film, which was then subjected to oxygen-permeability test. The result obtained is shown in Table 1 which indicates excellent gas barrier properties.

### Example 4

The same procedure as in Example 1 was repeated, except that a direct gravure coater (Multicoater M-200 manufactured by Hirano Tech-Seed) by a direct gravure coating method (coating speed: 1.7 m/minute, drying temperature: 80°C, repeatedly coated 4 times) and the substrate was replaced with a biaxially oriented polystyrene (OPS) film having a thickness of 25 µm [TYPE(TH)CO, corona-treated, manufactured by Asahi Chemical Industry Co., Ltd.) to obtain a gas barrier film, which was then subjected to oxygen- permeability test. The result obtained is shown in Table 1 which indicates excellent gas barrier properties.

### Comparative Example 1

The same procedure as in Example 1 was repeated, except that Liquid A was not used and a 1% by weight solution of polyvinyl alcohol (PVA 210 manufactured by Kurarey, saponification degree: 88.55%, polymerization degree: 1,000) in deionized water (0.7 µS/cm or less) was substituted for the Liquid B, to obtain a film, which was then subjected to oxygen-permeability test. The result obtained is shown in Table 1 which indicates inferior gas barrier properties.

### Comparative Example 2

The same procedure as in Example 1 was repeated, except that Liquid A was not used and a 2% by weight solution of hydroxyethylcellulose (HEC manufactured by Wako Junyaku Kogyo) in deionized water (0.7 µS/cm or less) was substituted for the Liquid B, to obtain a film, which was then subjected to oxygen-permeability test. The result obtained is shown in Table 1 which indicates inferior gas barrier properties.

### Comparative Example 3

The same procedure as in Example 1 was repeated, except that the Liquid A was replaced with a dispersion obtained by dispersing synthetic hectorite [Laponite XLG manufactured by Nihon Silica Kogyo, particle size: 35 nm, a value: about 1 nm (diffraction peak was broad), aspect ratio: about 35] in deionized water (0.7 µS/cm or less) in a proportion of 2% by weight and the Liquid B was replaced with a 1% by weight solution of polyvinyl alcohol (PVA 210 manufactured by Kurarey, saponification degree: 88.5%, polymerization degree: 1,000) in deionized water (0.7 µS/cm or less), to obtain a film, which was then subjected to oxygen-permeability test. The result obtained is shown in Table 1 which indicates inferior gas barrier properties.

### Comparative Example 4

The same procedure as in Example 1 was repeated, except that Liquid B was not used, to prepare a film. However, the synthetic mica was peeled off from the laminated film and flaws showed horribly on the film surface, and the film-formability was inferior.

### Comparative Example 5

Triacetylcellulose (TAC) film (thickens: 76 µm, FUJITAC CLEAR manufactured by Fuji Photo Film Co., Ltd.) had an oxygen-permeability at 61% RH as shown in Table 1 which indicates greatly inferior gas barrier properties.

### Comparative Example 6

A biaxially oriented polystyrene (OPS) film having a thickness of 25 µm [TYPE(TH)CO, corona-treated, manufactured by Asahi Chemical Industry Co., Ltd.] had an oxygen-permeability at 31°C and 61% RH as shown in Table 1 which indicates greatly inferior gas barrier properties.

### Examples 5-15

The oxygen-permeabilities of films each composed of the inorganic laminar compound, resin and substrate shown in Table 2 in the proportions shown in Table 2 were measured. Each of the films was formed by coating on the substrate a coating solution consisting of Liquid A and Liquid B prepared in the same manner as in Example 1, except that both Liquids A and B had a concentration of 2% by weight, by a gravure coater (Testcoater NCR 3-230, CAG 150, CR3 manufactured by Yasui Seiki) by a microgravure coating method [coating speed: 1-3 m/minute, drying temperature: 60°C (inlet heater) and 100°C (outlet heater)] .

The results obtained are shown in Table 2 which indicates excellent gas barrier properties.

### Comparative Examples 7-13

The oxygen-permeabilities of films each composed of the inorganic laminar compound, resin and substrate shown in Table 2 in the proportions shown in Table 2 prepared in the same manner as in Examples 1-15 and the oxygen-permeability of the substrate alone were measured. The results obtained are shown in Table 2 which indicates inferior gas barrier properties.

### Examples 16-25

Films each composed of the inorganic laminar compound, resin and substrate shown in Table 3 in the proportions shown in Table 3 which had been subjected to heat treatment after film-formation under the conditions shown in Table 3 were subjected to oxygen-permeability test before and after immersion in hot water. The films were prepared by coating the substrate with a coating solution prepared in the same manner as in Example 1, except that the concentrations of Liquids A and B were 2% by weight and a cross-linking agent for hydrogen-bonding group was added after the preparation of the coating solution consisting of Liquids A and B, by means of a gravure coater (Testcoater NCR 3-230, CAG 150, CR3 manufactured by Yasui Seiki) by a microgravure coating method [coating speed: 1-3 m/minute, drying temperature: 60°C (inlet heater) and 100°C (outlet heater)]. The heat treatment after film-formation was conducted by subjecting the films to treatment by a hot air dryer (Perfect Oven manufactured by Tabai Esupekku) at the predetermined temperature for the predetermined time. The oxygen-permeability test after immersion in hot water was conducted as follows: The sample was immersed in water at 60°C for 13 hours, air dried, dried at 60°C for 1 hour and then subjected to oxygen-permeability test.

The results obtained are shown in Table 3 which indicates excellent gas barrier properties. The films which had been heat-treated or films in which a cross-linking agent for the hydrogen-bonding group was used indicate remarkable enhancement of water resistance.

### Comparative Examples 4-15

The oxygen-permeability test after immersion in hot water was conducted of films each composed of the inorganic laminar compound, resin, substrate and cross-linking agent shown in Table 3 in the proportions shown in Table 3, the films having been prepared by the same manner as in Examples 16-25 and heat-treated under the conditions shown in Table 3. The results obtained are shown in Table 3, which indicates inferior gas barrier properties and inferior water resistance.

### Examples 26-33

Films each composed of the inorganic laminar compound, resin and cross-linking agent shown in Table 4 in the proportions shown in Table 4 which had been subjected to heat treatment after film-formation under the conditions shown in Table 4 were subjected to dissolution resistance test. The films were prepared by casting a coating solution prepared in the same manner as in Example 1, except that the concentrations of Liquids A and B were 2% by weight and the cross-linking agent was added after the preparation of the coating solution consisting of Liquids A and B, on an acrylic resin plate so that the film thickness after drying became about 20 µm, and drying the resulting films at room temperature. The dissolution resistance test was conducted as follows: The film sample obtained was subjected to heat-treatment by a hot air dryer (Perfect Oven manufactured by Tabai Esupekku) at the predetermined temperature for the predetermined time, wrapped with a stainless steel net, immersed in hot water at 80°C for 10 minutes, taken out together with the stainless steel net, air-dried and then air-dried at 60°C for 1 hour, after which the weight percentage of the remainder was determined (the higher the percentage of remainder, the better the water resistance). The results obtained are shown in Table 4 which indicates excellent water resistance.

### Comparative Examples 16-24

Dissolution resistance test was conducted of films each composed of the inorganic laminar compound, resin and cross-linking agent shown in Table 4 in the proportions shown in Table 4 prepared in the same manner as in Examples 26-33. The results obtained are shown in Table 4 which indicates inferior water resistance. In particular, in Comparative Example 19, coloration was violent; in Comparative Examples 21-23, deformation of film was violent; and in each case, the appearance was inferior.

### Examples 34 - 45

Oxygen-permeability test was conducted in the same manner as in Examples 16 - 25, except that the test was conducted at high humidity. The results obtained are shown in Table 5 which indicate superior gas barrier property.

### Comparative Examples 25 and 26

Oxygen-permeability test was conducted at high humidity as in Examples 34 - 45 by using an ethylene-vinyl alcohol copolymer film (trade name: Eval EF-F, manufactured by Kuraray Co., Ltd., film thickness 15 µm) which is a commercially available barrier film. The results obtained are shown in Table 5 which indicate inferior gas barrier property.

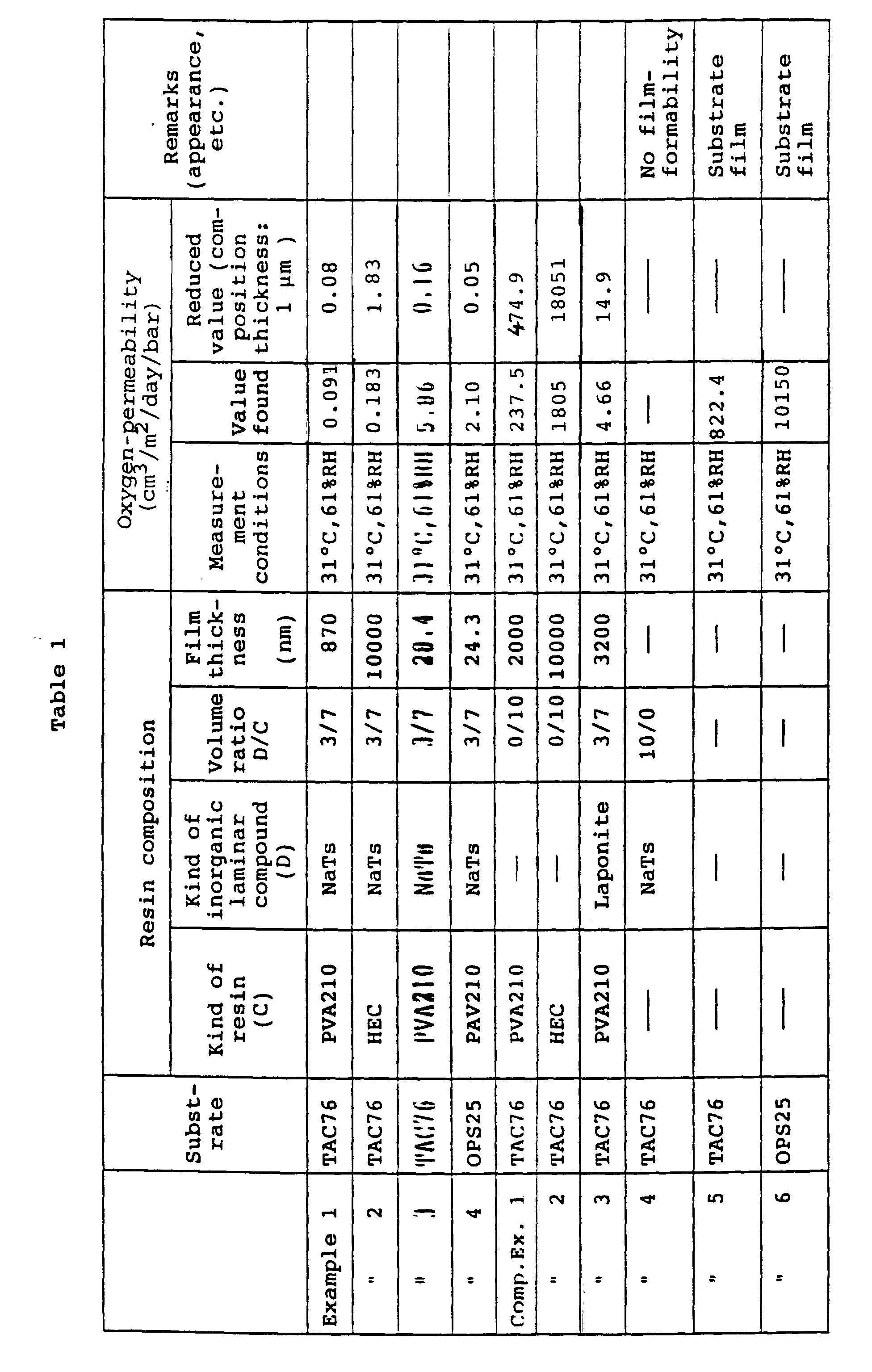

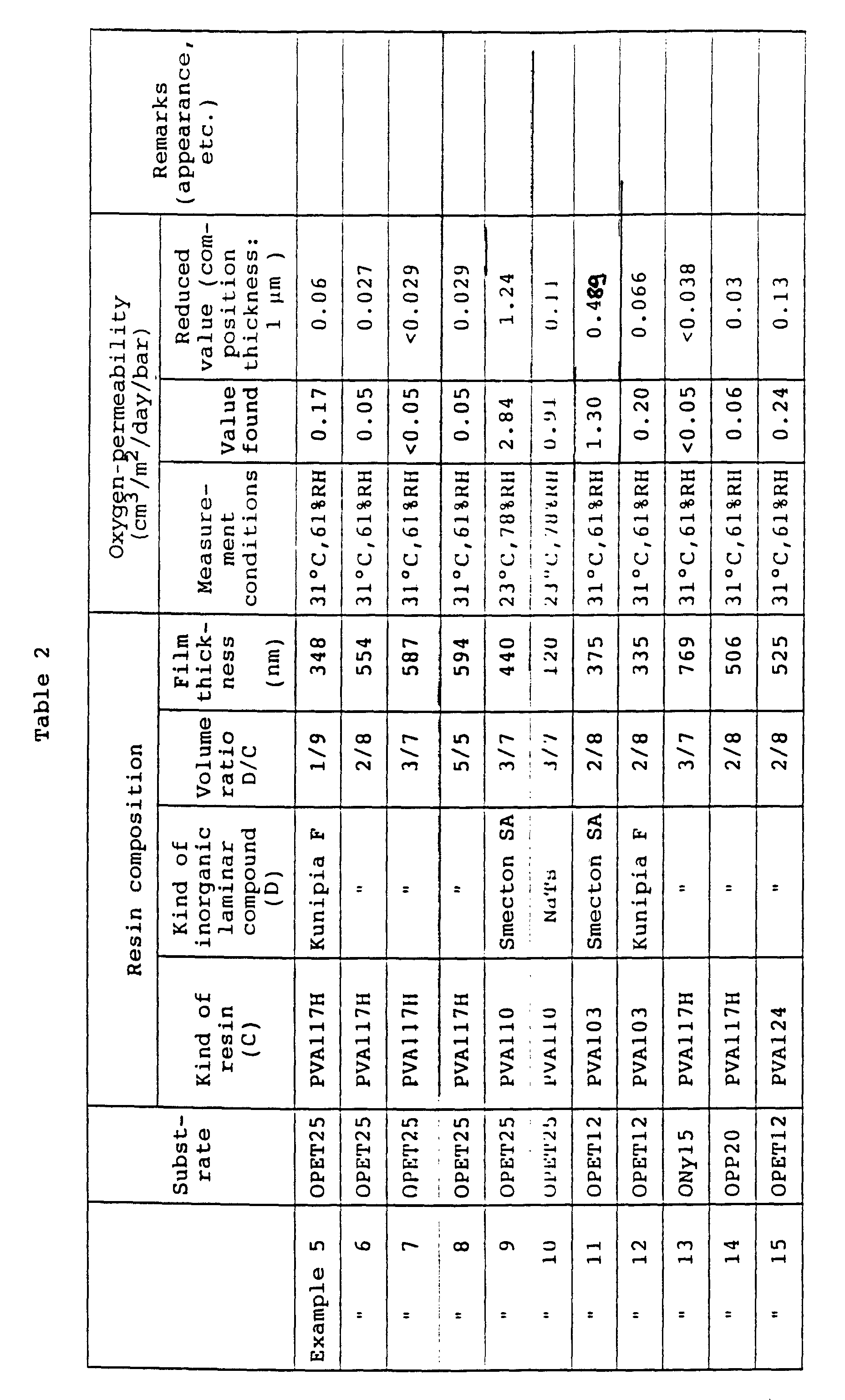

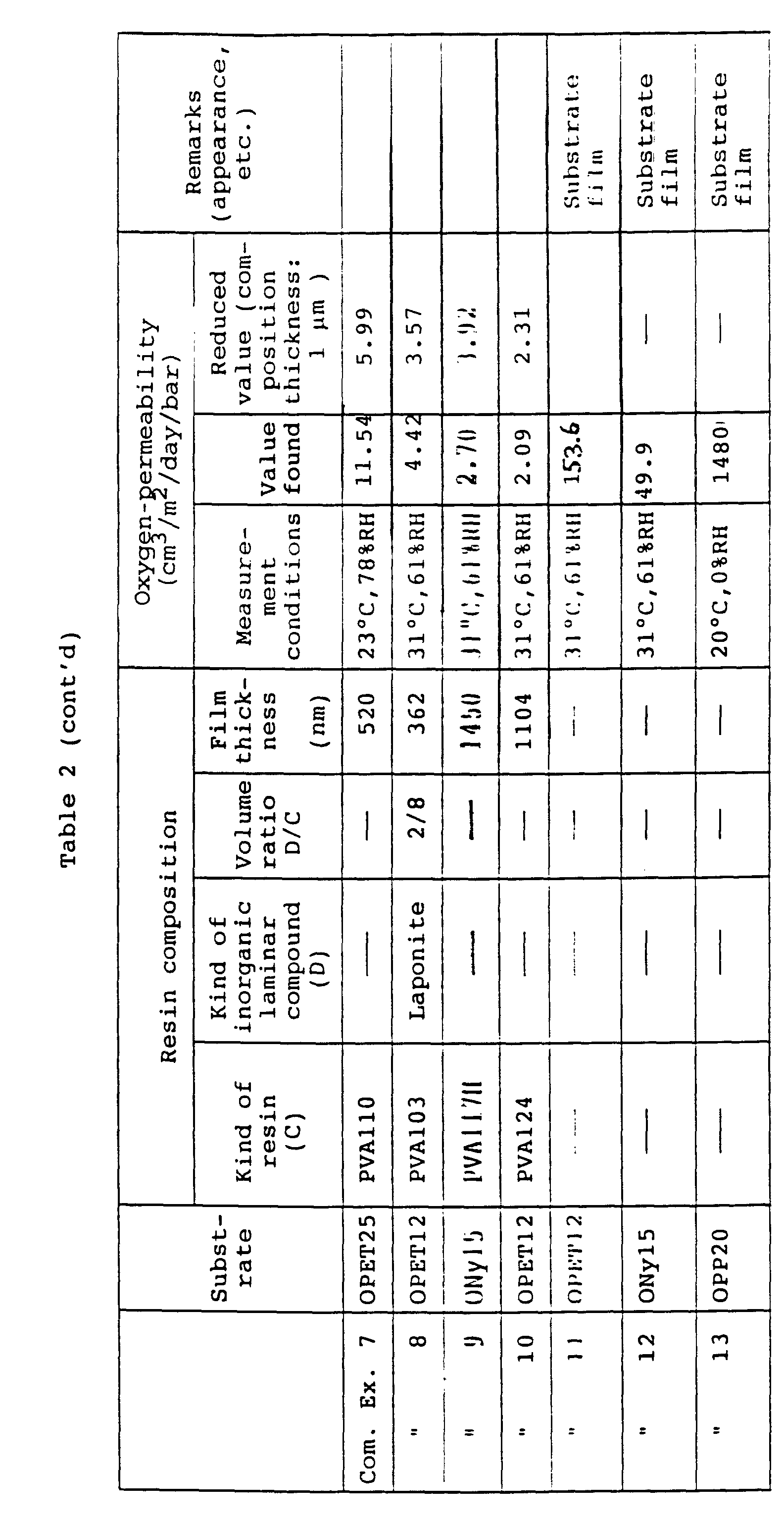

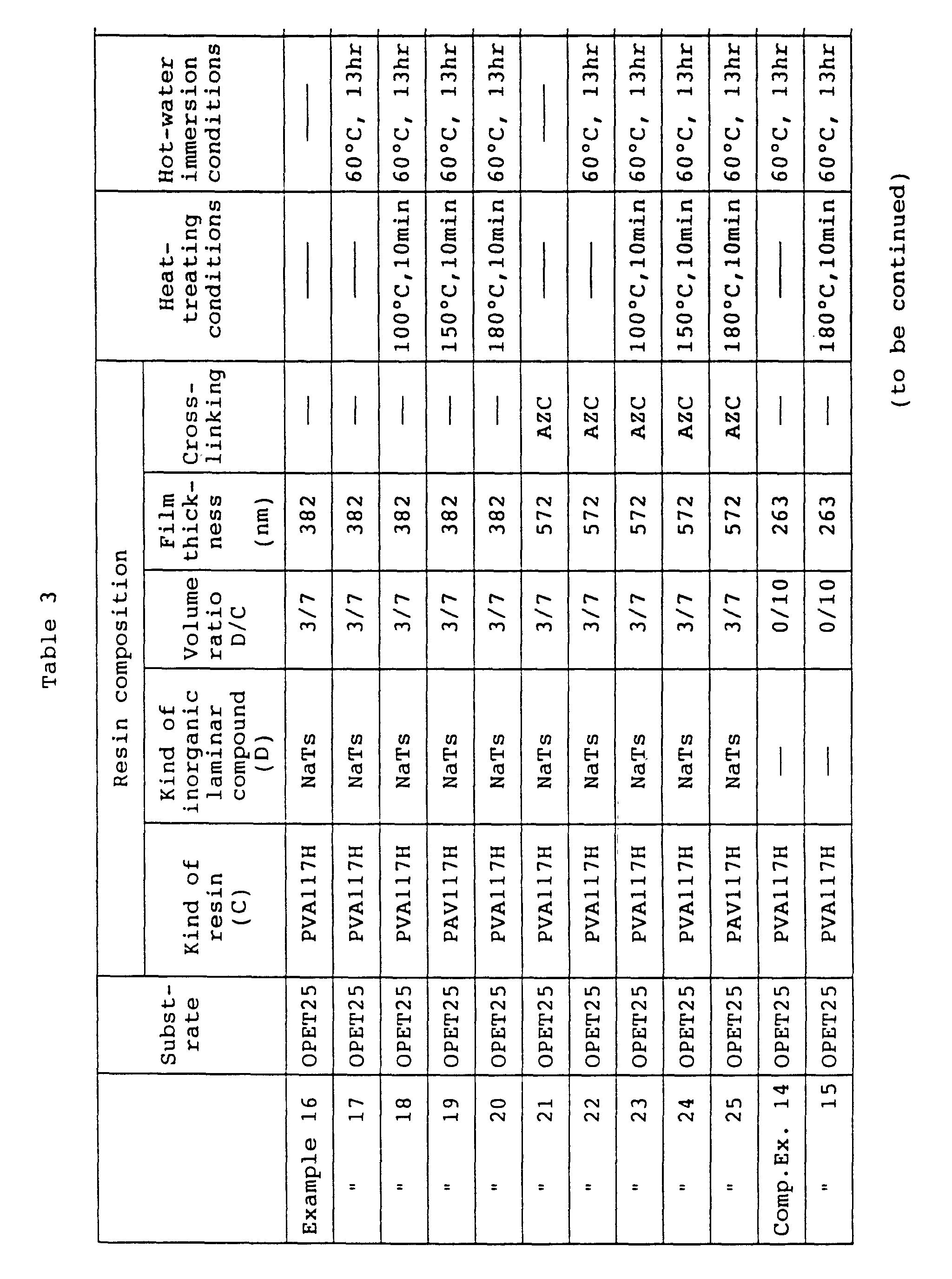

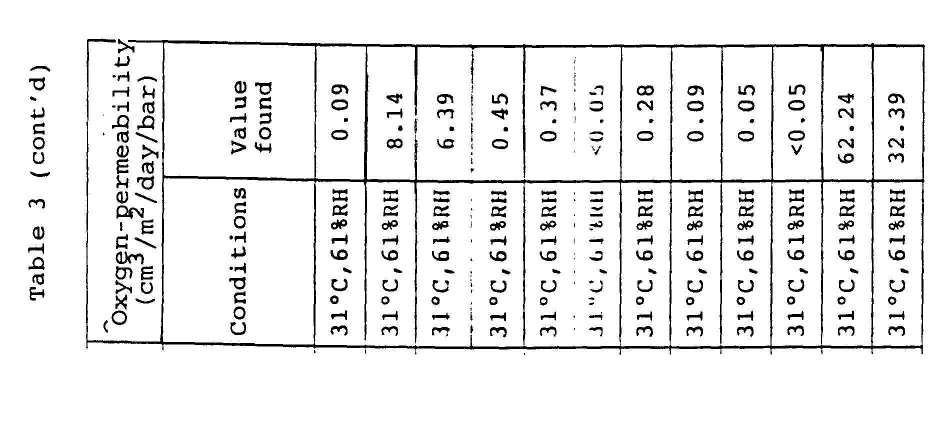

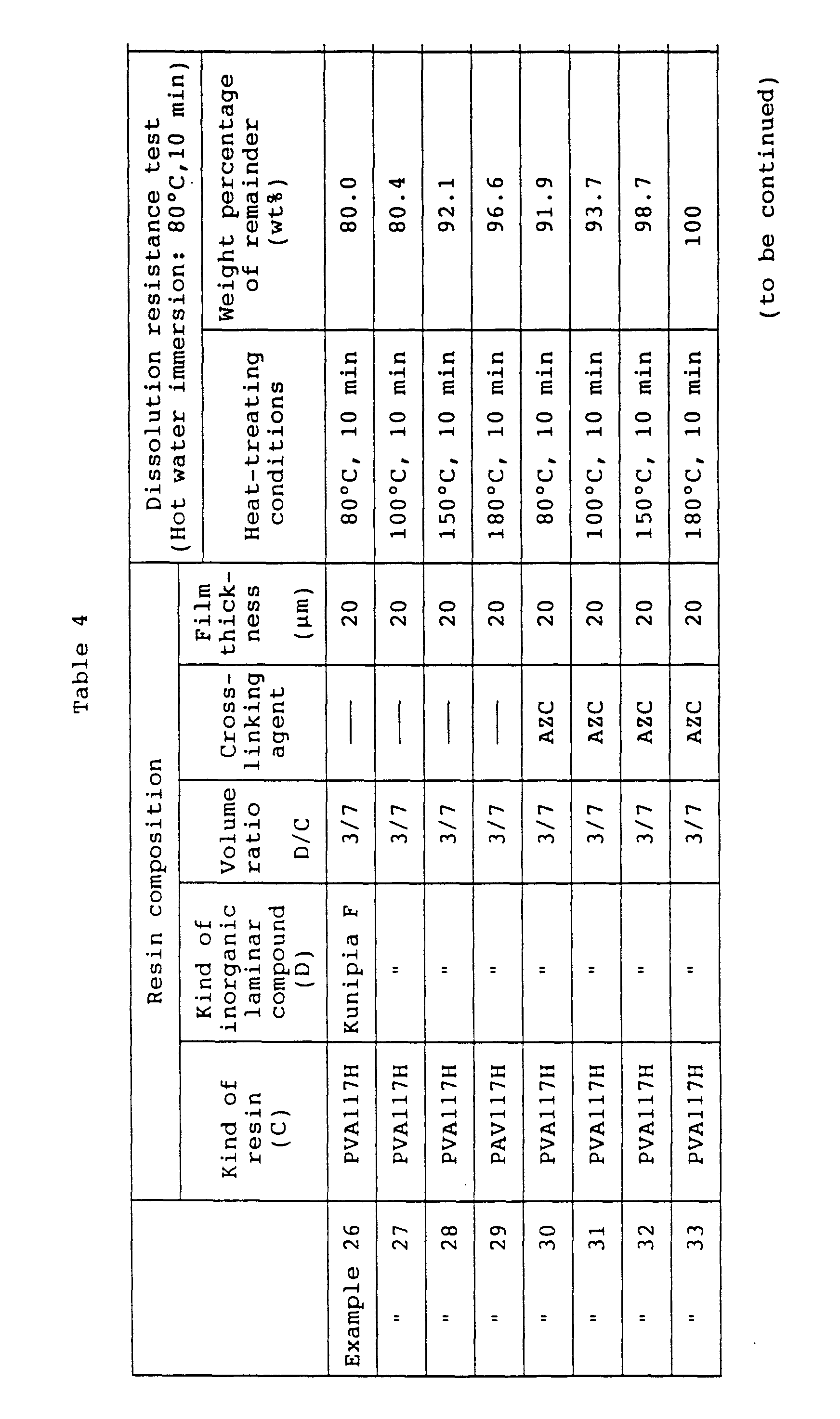

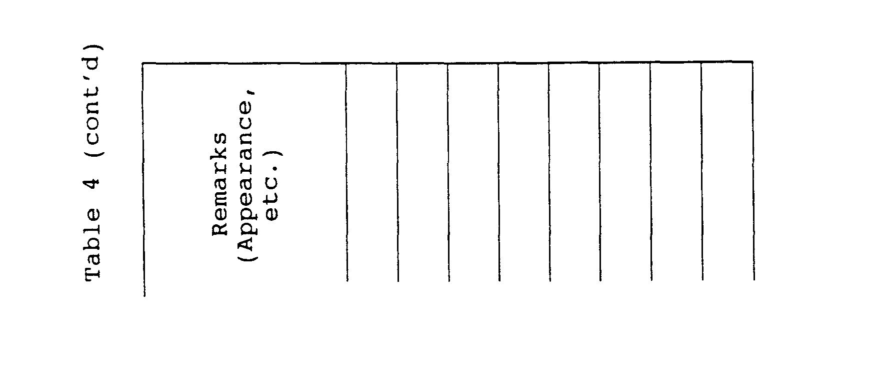

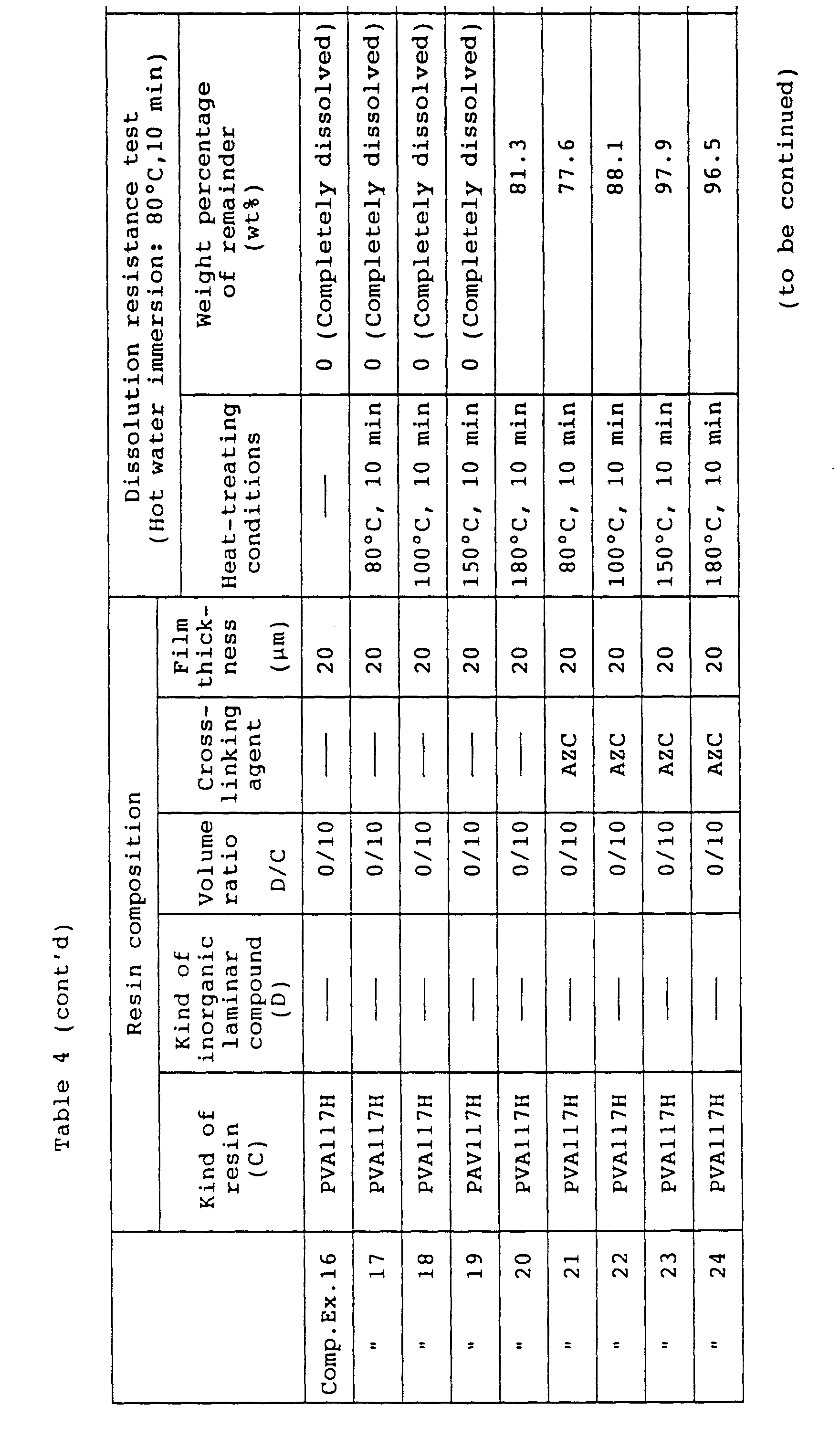

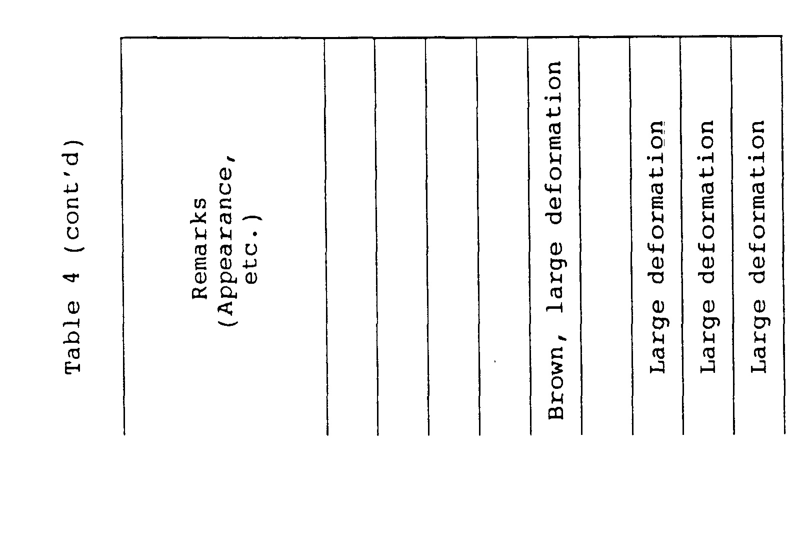

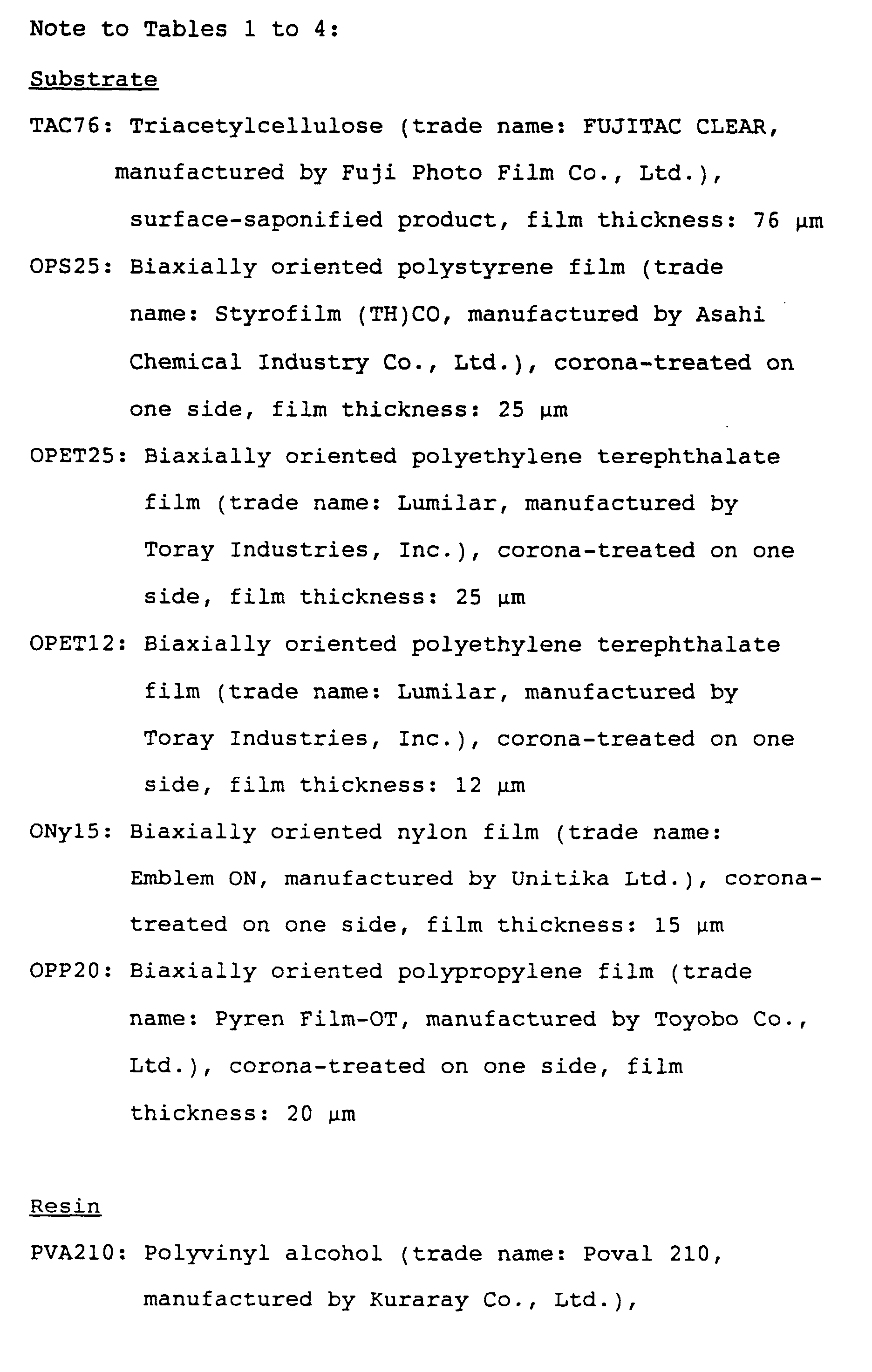

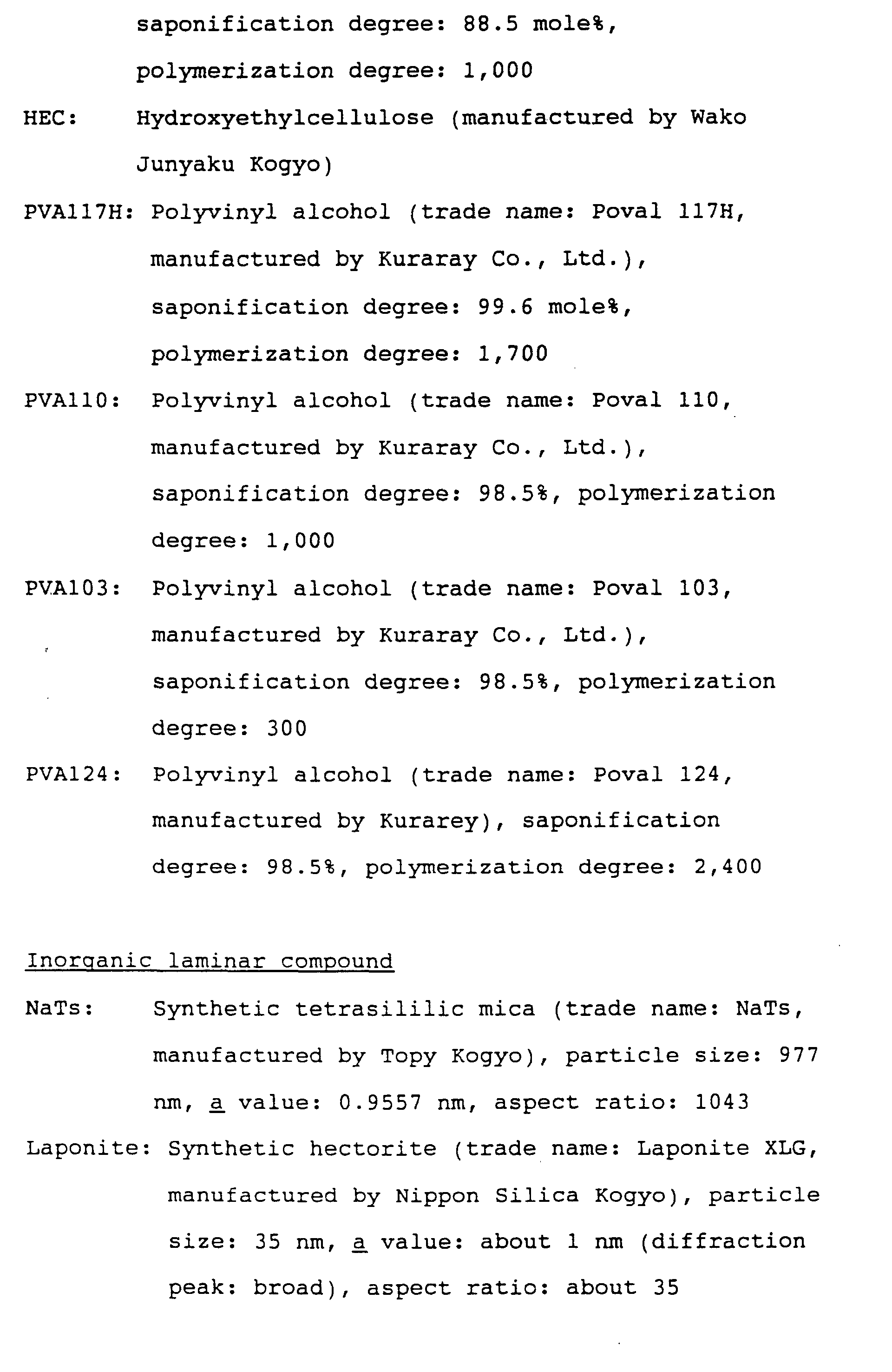

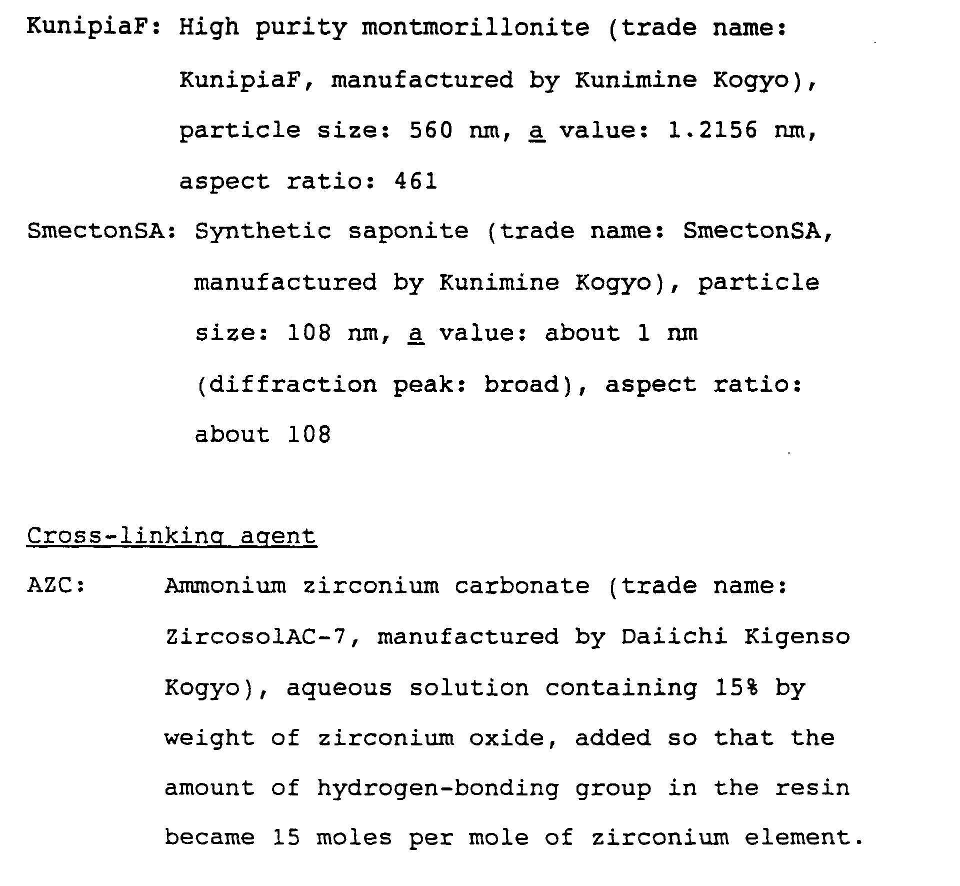

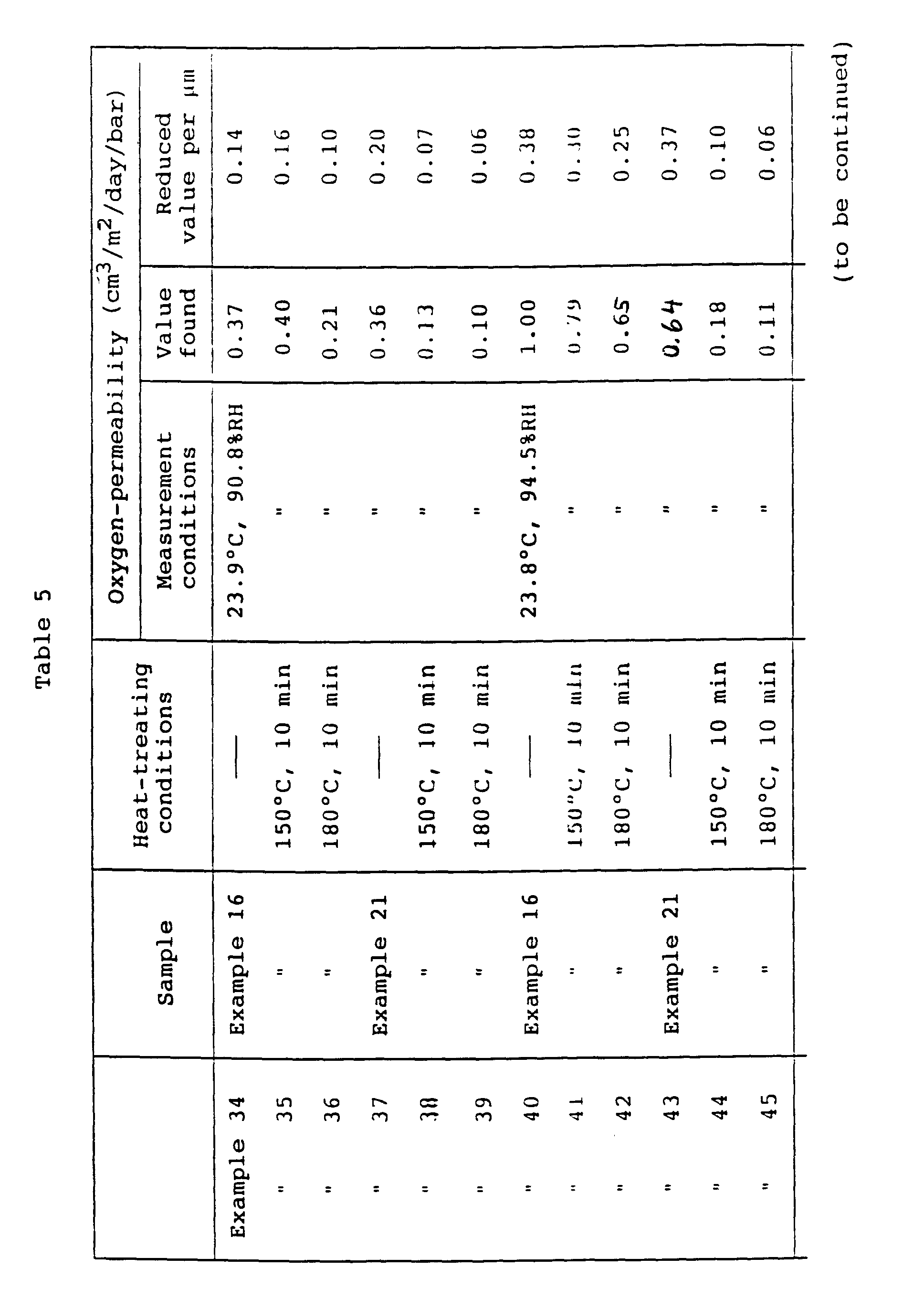

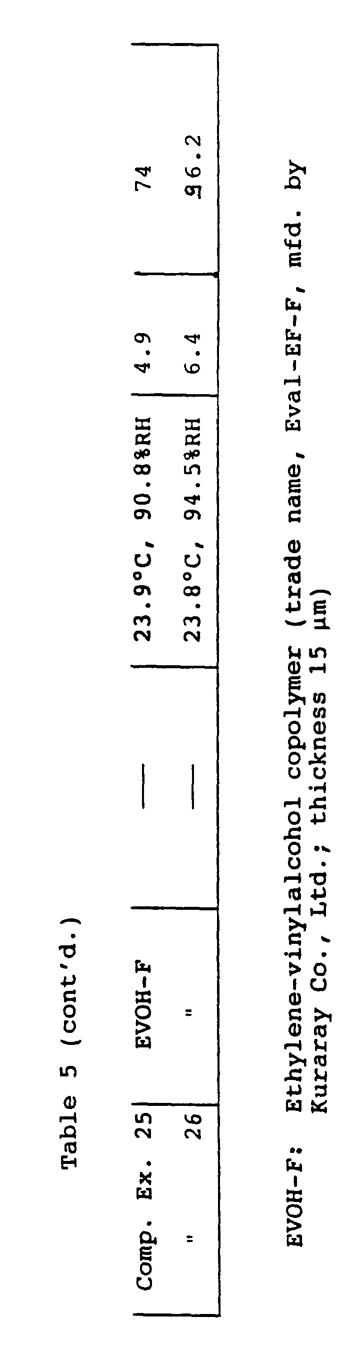

## Claims

1. A resin composition or its film which comprises a polyvinyl alcohol obtained by hydrolyzing the ester portion of a vinyl acetate polymer, the degree of saponification being 80 mole % or more, and an inorganic laminar compound having a particle size L of 5 µm or less determined by a dynamic light-scattering method and an aspect ratio Z=L/a of 50-5,000 wherein a is the unit thickness determined by a powder X-ray diffraction, and wherein the inorganic laminar compound is swollen or cloven with a solvent.

2. A resin composition or its film according to claim 1, wherein the inorganic laminar compound is a clay mineral having a swellability.

3. A resin composition or its film according to claim 1 or 2, wherein the aspect ratio of the inorganic laminar compound is 200-3,000.

4. A resin composition or its film according to any one of claims 1 to 3, wherein the volume ratio of the inorganic laminar compound to the resin is in the range of 5/95 - 90/10.

5. A resin composition or its film according to any one of claims 1 to 4, which further contains a cross-linking agent for the hydrogen-bonding group of the polyvinyl alcohol resin.

6. A resin composition or its film according to claim 5, wherein the cross-linking agent is a zirconia compound.

7. A resin composition or its film according to any one of claims 1 to 6, which has an oxygen-permeability per µm of thickness at 31°C and 61% RH of 2 cc/m²/day/atm (cm³/m²/day/bar) or less.

8. A resin composition or its film according to any one of claims 1 to 6, which has an oxygen-permeability per µm of thickness at 31°C and 61% RH of 0.2 cc/m²/day/atm (cm³/m²/day/bar) or less.

9. A resin composition according to any one of claims 1 to 8, wherein the polyvinyl alcohol consists of vinyl alcohol and vinyl acetate units.

10. A process for producing a resin composition or its film according to any one of claims 1 to 9, which comprises dispersing an inorganic laminar compound in a resin or a resin solution in the state that the inorganic laminar compound is swollen or cloven with a solvent, and removing the solvent from the dispersion, if necessary in the form of a film, while keeping said state.

11. A process according to claim 10, wherein the resin composition or film is subjected, after the removal of solvent, to heat-ageing at a temperature of 110°C to 220°C.

12. A process according to claim 10, wherein the resin composition or its film according to claim 5 or 6 is subjected to heat-aging at a temperature of 110° to 220°C after the removal of solvent.

13. A laminated film or laminate having at least one layer of the film according to any one of claims 1 to 9.

14. A laminated film or laminate comprising at least one layer selected from a biaxially oriented polypropylene film, a biaxially oriented nylon film and a biaxially oriented polyethylene terephthalate film, and at least one layer of the film according to any one of claims 1 to 9.

15. Use of (a) an inorganic laminar compound having a particle size L of 5 µm or less determined by a dynamic light-scattering method and an aspect ratio Z=L/a of 50-5,000, wherein a is the unit thickness determined by X-ray diffraction and wherein the inorganic laminar compound is swollen or cloven with a solvent, and (b) a polyvinyl alcohol, in a gas barrier resin composition or a film formed therefrom.

16. Use according to claim 15 wherein the aspect ratio of the inorganic laminar compound is from 200-3,000.

## Patentansprüche

1. Harzzusammensetzung oder deren Film, die bzw. der einen Polyvinylalkohol, der durch Hydrolysieren des Esterteils eines Vinylacetatpolymers erhalten wurde, wobei der Verseifungsgrad 80 Mol-% oder mehr beträgt, und eine anorganische schichtenförmige Verbindung mit einer Teilchengröße L von 5 µm oder weniger gemäß der Bestimmung durch ein dynamisches Lichtstreuungsverfahren und einem Seitenverhältnis Z=L/a von 50-5000, wobei a die Einheitsdicke gemäß der Bestimmung durch Röntgenbeugung ist, umfasst, und wobei die anorganische schichtenförmige Verbindung mit einem Lösemittel gequollen oder durchdrungen ist.

2. Harzzusammensetzung oder deren Film nach Anspruch 1, wobei die anorganische schichtenförmige Verbindung ein Tonmineral mit Quellbarkeit ist.

3. Harzzusammensetzung oder deren Film nach Anspruch 1 oder 2, wobei das Seitenverhältnis der anorganischen schichtenförmigen Verbindung 200-3000 ist.

4. Harzzusammensetzung oder deren Film nach einem der Ansprüche 1 bis 3, wobei das Volumenverhältnis der anorganischen schichtenförmigen Verbindung zum Harz im Bereich von 5/95-90/10 liegt.

5. Harzzusammensetzung oder deren Film nach einem der Ansprüche 1 bis 4, die bzw. der ferner ein Vernetzungsmittel für die Wasserstoffbrückenbindungsgruppe des Polyvinylalkoholharzes enthält.

6. Harzzusammensetzung oder deren Film nach Anspruch 5, wobei das Vernetzungsmittel eine Zirkoniumöxidverbindung ist.

7. Harzzusammensetzung oder deren Film nach einem der Ansprüche 1 bis 6, die bzw. der eine Sauerstoffdurchlässigkeit pro µm der Dicke bei 31 °C und 61 % relative Luftfeuchtigkeit von 2 cm³/m²/Tag/atm (cm³/m²/Tag/bar) oder weniger aufweist.

8. Harz zusammensetzung oder deren Film nach einem der Ansprüche 1 bis 6, die bzw. der eine Sauerstoffdurchlässigkeit pro µm der Dicke bei 31 °C und 61 % relative Luftfeuchtigkeit von 0,2 cm³/m²/Tag/atm (cm³/m²/Tag/bar) oder weniger aufweist.

9. Harzzusammensetzung oder deren Film nach einem der Ansprüche 1 bis 8, wobei der Polyvinylalkohol aus Vinylalkohol- und Vinylacetateinheiten besteht.

10. Verfahren zur Herstellung einer Harzzusammensetzung oder von deren Film gemäß einem der Ansprüche 1 bis 9, das das Dispergieren einer anorganischen schichtenförmigen Verbindung in einem Harz oder einer Harzlösung in einem Zustand, bei dem die anorganische schichtenförmige Verbindung mit einem Lösemittel gequollen oder durchdrungen wird, und das Entfernen des Lösemittels aus der Dispersion, bei Bedarf in Form eines Films unter Beibehalten des Zustands umfasst.

11. Verfahren nach Anspruch 10, wobei die Harzzusammensetzung oder der Film nach dem Entfernen des Lösemittels einer Wärmealterung bei einer Temperatur von 110 °C bis 220 °C unterzogen wird.

12. Verfahren nach Anspruch 10, wobei die Harzzusammensetzung oder deren Film nach Anspruch 5 oder 6 nach dem Entfernen des Lösemittels einer Wärmealterung bei einer Temperatur von 110 °C bis 220 °C unterzogen wird.

13. Laminierter Film oder Laminat mit mindestens einer Schicht des Films nach einem der Ansprüche 1 bis 9.

14. Laminierter Film oder Laminat, der bzw. das mindestens eine Schicht, die aus einem biaxial orientierten Polypropylenfilm, einem biaxial orientierten Nylonfilm und einem biaxial orientierten Polyethylenterephthalatfilm ausgewählt ist, und mindestens eine Schicht des Films nach einem der Ansprüche 1 bis 9 umfasst.

15. Verwendung von (a) einer anorganischen schichtenförmigen Verbindung mit einer Teilchengröße L von 5 µm oder weniger gemäß der Bestimmung durch ein dynamisches Lichtstreuungsverfahren und einem Seitenverhältnis Z=L/a von 50-5000, wobei a die Einheitsdicke gemäß der Bestimmung durch Röntgenbeugung ist, und wobei die anorganische schichtenförmige Verbindung mit einem Lösemittel gequollen oder durchdrungen ist, und (b) einem Polyvinylalkohol in einer gasdichten Harzzusammensetzung oder einem daraus gebildeten Film.

16. Verwendung nach Anspruch 15, wobei das Seitenverhältnis der anorganischen schichtenförmigen Verbindung 200-3000 beträgt.

## Revendications

1. Composition de résine ou son film qui comprend un poly(alcool vinylique) obtenu en hydrolysant la partie ester d'un polymère d'acétate de vinyle, le degré de saponification étant de 80% en moles ou plus, et un composé laminaire inorganique ayant une granulométrie L de 5 µm ou moins déterminée par un procédé de diffusion dynamique de la lumière et un rapport d'aspect Z=L/a de 50 à 5 000, dans laquelle a est l'épaisseur unitaire déterminée par une diffraction des rayons X sur poudre, et dans laquelle le composé laminaire inorganique est gonflé ou clivé avec un solvant.

2. Composition de résine ou son film selon la revendication 1, dans laquelle le composé laminaire inorganique est un minéral argileux ayant une capacité à gonfler.

3. Composition de résine ou son film selon la revendication 1 ou 2, dans laquelle le rapport d'aspect du composé laminaire inorganique va de 200 à 3 000.

4. Composition de résine ou son film selon l'une quelconque des revendications 1 à 3, dans laquelle le rapport volumique du composé laminaire inorganique à la résine est dans la gamme de 5/95 à 90/10.

5. Composition de résine ou son film selon l'une quelconque des revendications 1 à 4, qui contient de plus un agent de réticulation pour le groupe de liaison hydrogène de la résine de poly(alcool vinylique).

6. Composition de résine ou son film selon la revendication 5, dans laquelle l'agent de réticulation est un composé du zirconium.

7. Composition résine ou son film selon l'une quelconque des revendications 1 à 6, qui possède une perméabilité à l'oxygène par µm d'épaisseur à 31 °C et 61% HR de 2 cm³/m²/jour/atm (cm³/m²/jour/bar) ou moins.

8. Composition de résine ou son film selon l'une quelconque des revendications 1 à 6, qui possède une perméabilité à l'oxygène par µm d'épaisseur à 31°C et 61% HR de 0,2 cm³/m²/jour/atm (cm³/m²/jour/bar) ou moins.

9. Composition de résine selon l'une quelconque des revendications 1 à 8, dans laquelle le poly(alcool vinylique) se composé de motifs alcool vinylique et acétate de vinyle.

10. Procédé pour produire une composition de résine ou son film selon l'une quelconque des revendications 1 à 9, qui consiste à disperser un composé laminaire inorganique dans une résine ou une solution de résine dans l'état où le composé laminaire inorganique est gonflé ou clivé avec un solvant, et retirer le solvant de la dispersion, si nécessaire sous forme d'un film, tout en gardant ledit état.

11. Procédé selon la revendication 10, dans lequel la composition ou film de résine est soumis, après l'élimination du solvant, à un vieillissement thermique à une température comprise entre 110°C à 220°C.

12. Procédé selon la revendication 10, dans lequel la composition de résine ou son film selon la revendication 5 ou 6 est soumise à un vieillissement thermique à une température comprise entre 110°C et 220°C après l'élimination du solvant.

13. Film stratifié ou stratifié ayant au moins une couche du film selon l'une quelconque des revendications 1 à 9.

14. Film stratifié ou stratifié comprenant au moins une couche choisie parmi un film de polypropylène orienté biaxialement, un film de nylon orienté biaxialement et un film de poly(térephtalate d'éthylène) orienté biaxialement, et au moins une couche du film selon l'une quelconque des revendications 1 à 9.

15. Utilisation (a) d'un composé laminaire inorganique ayant une granulométrie L de 5 µm ou moins déterminée par un procédé de diffusion dynamique de la lumière et un rapport d'aspect Z=L/a de 50 à 5 000, dans lequel a est l'épaisseur unitaire déterminée par diffraction des rayons X, et dans laquelle le composé laminaire inorganique est gonflé ou clivé avec un solvant, et (b) d'un poly(alcool vinylique), dans une composition de résine barrière aux gaz ou un film formé à partir de celle-ci.

16. Utilisation selon la revendication 15, dans laquelle le rapport d'aspect du composé laminaire inorganique va de 200 à 3 000.
